# EUROPÄISCHE PATENTANMELDUNG

(11) **EP 4 124 274 A1**
(43) Veröffentlichungstag der Anmeldung: **01.02.2023**
(21) Anmeldenummer: 22187051.2
(22) Anmeldetag: 26.07.2022
(51) Int. Cl.: A47J 43/046, A47J 45/07

(54) **GRIFFHALTEVORRICHTUNG FÜR EINEN TOPF EINES KÜCHENGERÄTS**

(30) Priorität: 28.07.2021 DE 102021119642
(71) Anmelder: Wundermix GmbH, 85748 Garching b. München (DE)
(72) Erfinder: Keusgen, Adrian, 79346 Endingen am Kaiserstuhl (DE)
(74) Vertreter: Patentanwälte Bauer Vorberg Kayser

(57) **Zusammenfassung**

Die Erfindung betrifft eine Griffhaltevorrichtung (20) für einen Topf (30), aufweisend ein bogenförmiges Haltemittel (40) zur Anlage an einer Außenseite des Topfes (30), welches den Topf (30) in der am Topf (30) befestigten Position in horizontaler Ebene zumindest bereichsweise umgibt, und einen Griff (50), der mit dem bogenförmigen Haltemittel (40) verbunden ist, wobei die Griffhaltevorrichtung (20) lösbar mit dem Topf (30) verbindbar und derart an den zu verbindenden Topf (30) angepasst ist, dass Strukturelemente (70) des Topfes (30) das bogenförmige Haltemittel (40) während der Benutzung in seiner Position fixieren.

Die Erfindung betrifft ferner ein Küchengerät (100) mit einer derartigen Griffhaltevorrichtung (20).

## Beschreibung

Die vorliegende Erfindung betrifft eine Griffhaltevorrichtung für einen Topf eines Küchengeräts. Weiterhin betrifft die Erfindung ein Küchengerät mit einer solchen Griffhalterung. Schließlich betrifft die Erfindung ebenso ein Verfahren zum Anbringen einer Griffhaltevorrichtung an ein Küchengerät.

Es sind elektrische Küchengeräte bekannt, die einen Topf aufweisen, der im Bereich der Topföffnung zwei Griffe zum Anheben und Halten des Kopfes aufweist. Beispielsweise wird ein solches Küchengerät mit einem solchen Topf unter dem Namen Monsieur Cuisine von der Firma Silvercrest vertrieben, beispielsweise unter der zusätzlichen Bezeichnung SKMC 1200.

Ein wesentlicher Nachteil derartiger Töpfe besteht darin, dass diese stets mit zwei Händen gegriffen werden müssen. Soll der Inhalt des Topfes beispielsweise unter Rühren in einen weiteren Topf oder Behälter eingegossen werden, ist dies nur in zwei Schritten, erst gießen, dann rühren, oder durch zwei Personen machbar.

Die Aufgabe der Erfindung besteht darin, einen Topf, der zwei Griffe für eine beidhändige Bedienung aufweist auch für eine einhändige Bedienung nutzbar zu machen. Insbesondere soll eine einhändige Bedienung des Topfes der unter dem Namen Monsieur Cuisine vertriebenen Küchengeräts möglich sein. Insbesondere soll die zu schaffende Griffvorrichtung lösbar mit dem Topf verbindbar sein.

Die Erfindung wird durch eine Griffhaltevorrichtung mit den Merkmalen des Patentanspruchs 1 und ein Küchengerät mit den Merkmalen des Anspruchs 10 gelöst. Die Erfindung wird ebenso durch ein Verfahren mit den Merkmalen des Anspruchs 11 gelöst. Weitere, besonders vorteilhafte Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert wer-den können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß weist eine Griffhaltevorrichtung ein bogenförmiges Haltemittel zur Anlage an einer Außenseite des Topfes, welches den Topf in der am Topf befestigten Position in horizontaler Ebene zumindest bereichsweise umgibt auf. Mit dem Haltemittel ist ein Griff verbunden.

Die Griffhaltevorrichtung umgibt also den Topf an seiner Außenseite in einer im Wesentlichen horizontalen Ausrichtung bzw. Ebene und liegt zumindest bereichsweise, vorzugsweise größtenteils an der Außenfläche des Topfes an.

Wesentlich ist, dass die Griffhaltevorrichtung im montierten Zustand in ihrer Position fixiert, der Topf also sicher gehalten ist. Der Topf soll dabei insbesondere beispielsweise beim Ausgießen über die Griffhaltevorrichtung aus der Vertikalen heraus kippbar sein. Um dies zu erreichen, nutzt die Griffhaltevorrichtung Strukturelemente an der Außenseite des Topfes. Beispielsweise können sich die ohnehin angebrachten Griffe auf dem Haltemittel abstützen. Erfindungsgemäß kann der Topf mit einer Hand bewegt werden.

Die erfindungsgemäße Griffhaltervorrichtung kann nachträglich mit dem Topf verbunden werden. Dabei macht sie sich bereits vorhandene Strukturelemente an der Außenseite des Topfes zu Nutze.

Das Haltemittel und der Griff sind vorzugsweise einstückig ausgeführt, es ist aber auch eine lösbare Verbindung zwischen dem Haltemittel und Griff denkbar. Dies kann dann vorteilhaft sein, wenn unterschiedliche Griffformen mit dem Haltemittel verbindbar sein sollen.

Das Haltemittel kann beispielsweise im Bereich der am Topf befindlichen Griffe Vertiefungen oder Mulden aufweisen, in denen die Griffe im montierten Zustand der Griffhaltevorrichtung angeordnet sind. Die Vertiefungen weisen Innenflächen auf, die sich parallel zu vertikalen Flächen der Griffe erstrecken und mit denen sie an den vertikalen Flächen der Griffe anliegen, um ein Verschwenken des Topfes gegenüber der Griffhaltevorrichtung zu verhindern.

In einer besonders vorteilhaften Ausführungsvariante, in der die Griffhaltevorrichtung für den Topf Monsieur Cuisine geeignet sein soll, weist das bogenförmige Haltemittel Vertiefungen für sich vertikal erstreckende Strukturelemente an der Außenseite des Monsieur Cuisine Topfes auf. Auch bei dieser Ausführungsvariante liegen die sich im montierten Zustand vertikal erstreckende Innenflächen der Vertiefungen an sich vertikal erstreckenden Flächen der äußeren Strukturelemente des Topfes an.

Vorteilhafterweise weist die Griffhaltevorrichtung Fixiermittel auf, die die Griffhaltevorrichtung in vertikaler Richtung am Topf halten bzw. fixieren. Je nach Ausführung des Topfes können dies beispielsweise Haken, Öffnungen oder vorstehende Elemente sein. Weist der Topf an seiner Außenseite beispielsweise Öffnungen oder Vertiefungen auf, eignen sich insbesondere Vorsprünge an der Griffhaltevorrichtung, die sich im montierten Zustand in die Öffnungen oder Vertiefungen hinein erstrecken. Die Griffhaltevorrichtung ist damit in vertikaler Richtung am Topf gehalten. Beispielsweise weist der Topf Monsieur Cuisine zwei solcher Vertiefungen auf seiner Außenseite auf, in die sich entsprechende Fixiermittel der Griffhaltevorrichtung im montierten Zustand hineinerstrecken. Die Griffhaltevorrichtung rastet beim Verbinden mit dem Monsieur Cuisine Topf in die seitlichen Vertiefungen des Topfes ein. Obwohl die Verbindung grundsätzlich lösbar ist, muss die Griffhaltevorrichtung für den Kochbetrieb nicht entfernt werden und kann permanent montiert bleiben.

Die Vertiefungen an der Außenseite des Topfes können sich beispielsweise durch Öffnungen in Strukturelementen ergeben, die für die Anbringung der Strukturelemente an der Außenseite des Topfes beispielsweise mithilfe einer Schraube notwendig sind. Dies ist beispielsweise beim Monsieur Cuisine Topf der Fall, bei diesem sind die Griffe mithilfe einer Schraubverbindung mit dem Behälter verbunden. Oftmals sind solche Öffnungen mithilfe von Deckeln verschlossen, die aber in der Regel problemlos entfernt werden können.

In einer besonders vorteilhaften Ausführungsvariante der Erfindung können die Deckel der Öffnungen mithilfe eines Klebemittels entfernt werden. Das Klebemittel kann beispielsweise frontseitig auf einem stiftförmigen Hilfsmittel vorgesehen sein. Die Klebefläche des Stifts wird auf den Deckel aufgedrückt, bis sich ausreichende Klebekraft entwickelt hat, um den Deckel durch Ziehen zu lösen. Als Klebstoff eignet sich beispielsweise ein Acrylatklebstoff.

Das Lösen der Deckel beinhaltet die nachfolgenden Verfahrensschritte:
1. Reinigung der Verschlusskappe mit Alkoholtupfer
2. Ablüften der Klebestelle, z. B. 5 min
3. Drücken des stiftförmigen Hilfsmittels bzw. des Klebstoffes für 10 Sekunden zentrisch auf den Deckel,
5. Entfernen des Deckels durch Ziehen nach 12 - 24 Stunden.

Demgemäß wird nach einem weiteren Aspekt der Erfindung ein Verfahren zum Anbringen einer Griffhaltevorrichtung, insbesondere einer Griffhaltevorrichtung mit Fixiermitteln nach einer der hierin offenbarten Ausgestaltungen, an einem Küchengerät angegeben, wobei das Küchengerät einen Topf mit Strukturelementen aufweist, die wiederum mit lösbaren Deckeln verschlossene Öffnungen aufweisen, wobei bei dem Verfahren zuerst die Deckel entfernt werden, indem ein stiftförmiges Hilfsmittel, das frontseitig mit einem Klebemittel versehen ist, frontseitig auf den entsprechenden Deckel gedrückt wird, bis sich eine ausreichende Klebekraft entwickelt hat, um den Deckel durch Ziehen zu lösen und die jeweilige Öffnung freizugeben, und anschließend das bogenförmige Haltemittel der Griffhaltevorrichtung an eine Außenseite des Topfes angelegt wird, wobei die Fixiermittel mit den Öffnungen verrastet werden.

Gemäß einem noch weiteren Aspekt der Erfindung weist ein Küchengerät einen Topf mit Strukturelementen auf sowie eine Griffhaltevorrichtung gemäß einer der hierin offenbarten Ausgestaltungen. Hierbei liegt das bogenförmige Haltemittel der Griffhaltevorrichtung an einer Außenseite des Topfes an und umgibt den Topf in der am Topf befestigten Position in horizontaler Ebene zumindest bereichsweise. Die Griffhaltevorrichtung ist lösbar mit dem Topf verbunden und derart an den zu verbindenden Topf angepasst, dass die Strukturelemente des Topfes das bogenförmige Haltemittel während der Benutzung in seiner Position fixieren.

Es sei darauf hingewiesen, dass küchengerätebezogene Begriffsdefinitionen sowie der Wirkungen und Vorteile küchengerätegemäßer Merkmale vollumfänglich auf die Offenbarung sinngemäßer Definitionen, Wirkungen und Vorteile der erfindungsgemäßen Griffhaltevorrichtung zurückgegriffen werden kann und umgekehrt. Das heißt, Offenbarungen hierin bezüglich der erfindungsgemäßen Griffhaltevorrichtung können in sinngemäßer Weise ebenso zur Definition des erfindungsgemäßen Küchengeräts herangezogen werden, sofern dies nicht ausdrücklich ausgeschlossen ist. Ebenso können Offenbarungen hierin bezüglich des erfindungsgemäßen Küchengeräts in sinngemäßer Weise zur Definition der erfindungsgemäßen Griffhaltevorrichtung herangezogen werden, sofern dies nicht ebenfalls ausdrücklich ausgeschlossen ist. Insofern wird auf eine Wiederholung von Erläuterungen sinngemäß gleicher Merkmale, deren Wirkungen und Vorteile zugunsten einer kompakteren Beschreibung weitgehend verzichtet, ohne dass derartige Auslassungen als Einschränkung für den jeweiligen Erfindungsgegenstand auszulegen wären.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird.

In dieser Zeichnung zeigen schematisch:
- Fig. 1: eine perspektivische Explosionsansicht eines Ausführungsbeispiels einer Griffhaltevorrichtung gemäß der Erfindung in Zusammenschau mit einem Ausführungsbeispiel eines Küchengeräts gemäß der Erfindung,
- Fig. 2: eine perspektivische Ansicht der Griffhaltevorrichtung und des Küchengeräts aus Fig. 1 von schräg oben,
- Fig. 3: eine Seitenansicht der Griffhaltevorrichtung und des Küchengeräts aus Fig. 1,
- Fig. 4: eine perspektivische Ansicht der Griffhaltevorrichtung aus Fig. 1 von oben und
- Fig. 5: eine perspektivische Ansicht der Griffhaltevorrichtung aus Fig. 4 von unten.

In den unterschiedlichen Figuren sind hinsichtlich ihrer Funktion gleichwertige Teile stets mit denselben Bezugszeichen versehen, so dass diese in der Regel auch nur einmal beschrieben werden.

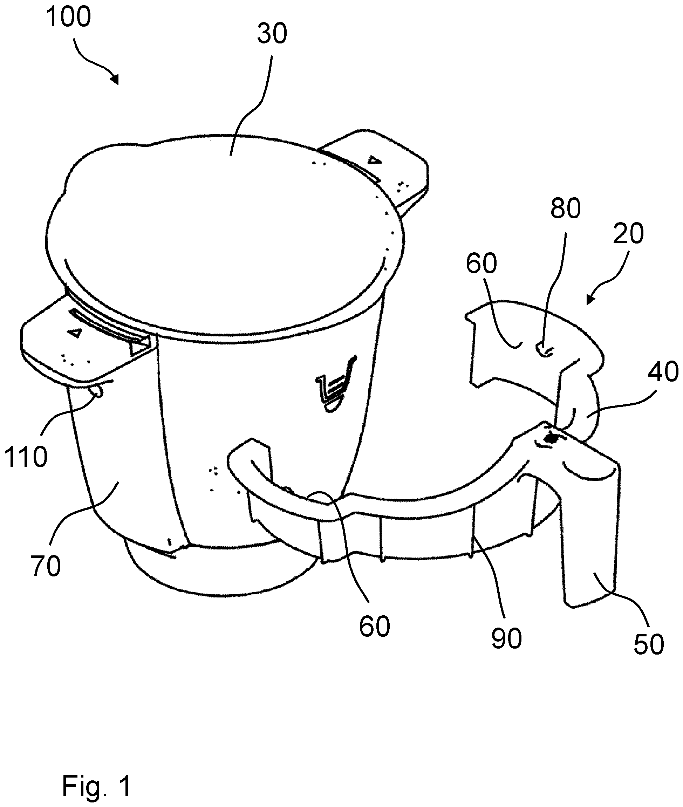

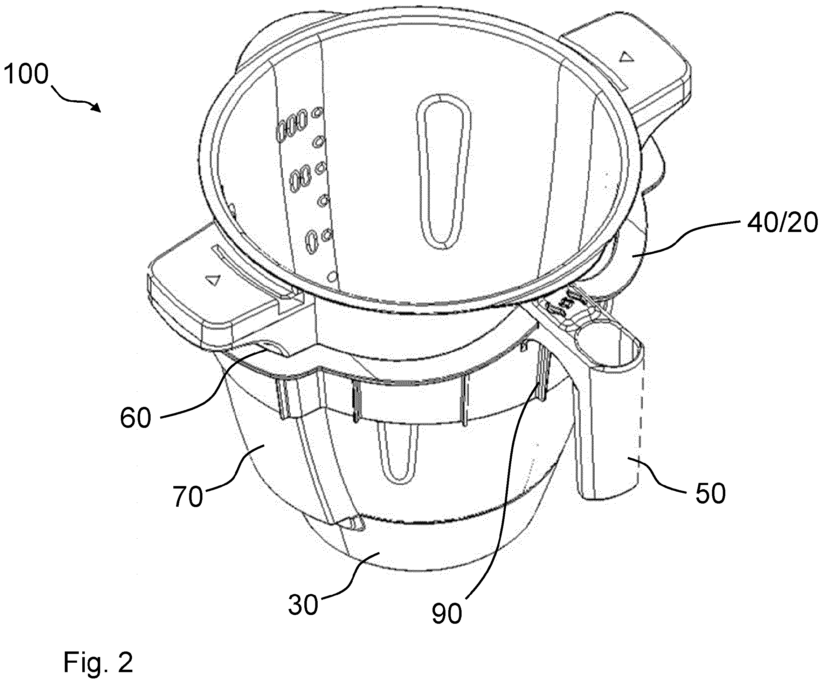

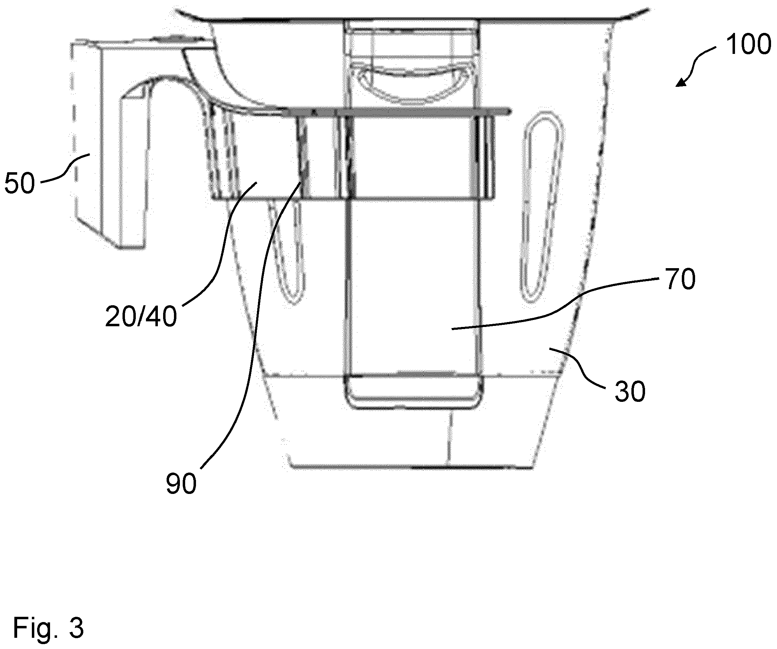

Ein bevorzugtes Ausführungsbeispiel der Erfindung ist in den beigefügten Figuren gezeigt. Die Fig. 1 bis 3 zeigen eine beispielhafte Griffhaltevorrichtung 20 in Zusammenschau mit einem Topf 30 eines Küchengeräts 100, mit dem die Griffhaltevorrichtung 20 genutzt werden kann. Gezeigt ist ein Topf 30, der unter der Bezeichnung Monsieur Cuisine von der Firma Silvercrest vertrieben wird, beispielsweise unter der zusätzlichen Bezeichnung SKMC 1200. Fig. 1 zeigt die Griffhaltevorrichtung 20 und den Topf 30 in einer Explosionsdarstellung, also mit gelöster Griffhaltevorrichtung 20.

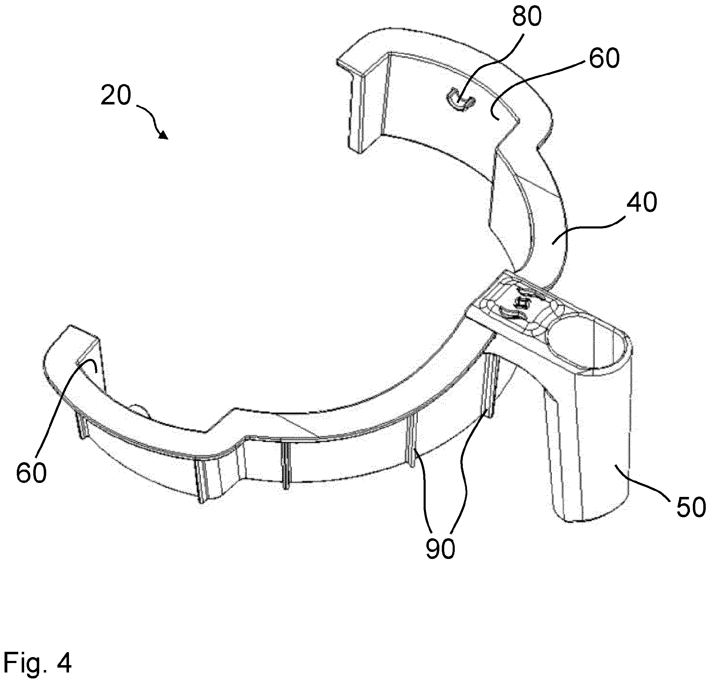

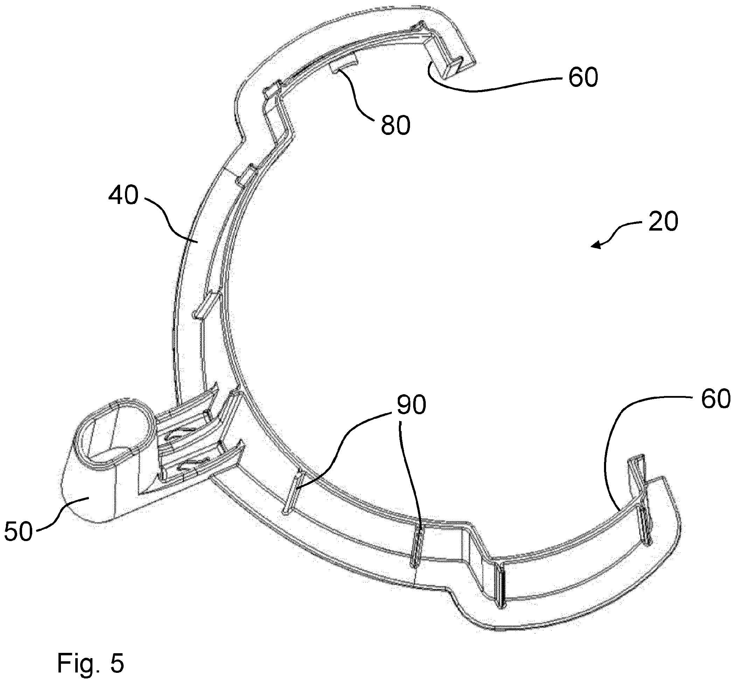

Die Figuren 4 und 5 zeigen nur die Griffhaltevorrichtung 20 in perspektivischer Darstellung von oben und von unten.

Die Griffhaltevorrichtung 20 weist ein bogenförmiges Haltemittel 40 auf, das im gezeigten Ausführungsbeispiel in einen Griff 50 übergeht. Erkennbar sind Vertiefungen 60 auf der Innenseite des Haltemittels 40, die mit seitlichen, sich vertikal erstreckenden Strukturelementen 70 des Topfes 30 zusammenwirken. Im montierten Zustand erstrecken sich die seitlichen Strukturelemente 70 durch die Vertiefungen 60 bzw. liegt die Innenfläche der Vertiefungen 60 an diesen an.

Das bogenförmige Haltemittel 40 umgibt den Topf 30 in einer horizontalen Ebene.

Weiterhin weist die Griffhaltevorrichtung 20 bei dem gezeigten Ausführungsbeispiel Fixiermittel 80 auf, vorliegend gebildet durch vorstehende Elemente bzw. Nasen. Die Fixiermittel 80 befinden sich im montierten Zustand in Öffnungen des Topfes 30, wodurch die Griffhaltevorrichtung 20 in vertikaler Richtung gehalten ist. Im gezeigten Ausführungsbeispiel befinden sich die Öffnungen in den Strukturelementen 70 und sind durch Löcher für nicht gezeigte Schrauben gebildet.

Die Griffhaltevorrichtung 20 ist aufgrund ihrer Form in einem einfachen Werkzeug herstellbar, die Form ist für ein Spritzgussverfahren optimiert. Die Griffhaltevorrichtung 20 kann dauerhaft am Topf 30 verbleiben, kann aber im Bedarfsfall auch gelöst werden.

Die Form der erfindungsgemäßen Griffhaltevorrichtung 20 hat eine hohe Eigensteifigkeit trotz geringem Materialeinsatz. Dies ist unter anderem durch sich vertikal erstreckende Rippen 90 begründet. Vorteilhafterweise ist die Griffhaltevorrichtung 20 ausgesprochen leicht, sie kann beispielsweise ein Eigengewicht von weniger als 200 g aufweisen.

Das in den Figuren gezeigte Ausführungsbeispiel ist nur beispielhaft zu verstehen und kann auch anders ausgeführt sein. Insbesondere sind die hierin offenbarte erfindungsgemäße Griffhaltevorrichtung sowie das Küchengerät nicht auf die hierin jeweils beschriebenen konkreten Ausführungsformen beschränkt, sondern umfassen auch gleich wirkende weitere Ausführungsformen, die sich aus technisch sinnvollen weiteren Kombinationen der hierin beschriebenen Merkmale aller Erfindungsgegenstände ergeben. Die vorstehend in der allgemeinen Beschreibung und der Figurenbeschreibung genannten und/oder in den Figuren allein gezeigten Merkmale und Merkmalskombinationen sind nicht nur in den jeweils hierin explizit angegebenen Kombinationen, sondern auch in anderen Kombinationen oder in Alleinstellung verwendbar, ohne den Rahmen der vorliegenden Erfindung zu verlassen.

In besonders bevorzugter Ausführung wird die erfindungsgemäße Griffhaltevorrichtung an einem Küchengerät verwendet, das einen Topf mit Strukturelementen aufweist, wobei ein bogenförmiges Haltemittel der Griffhaltevorrichtung an einer Außenseite des Topfes anliegt und den Topf in der am Topf befestigten Position in horizontaler Ebene zumindest bereichsweise umgibt und lösbar mit dem Topf verbunden ist und derart an den zu verbindenden Topf angepasst ist, dass die Strukturelemente des Topfes das bogenförmige Haltemittel während der Benutzung in seiner Position fixieren.

### Bezugszeichenliste

- 20: Griffhaltevorrichtung
- 30: Topf
- 40: Haltemittel
- 50: Griff
- 60: Vertiefung
- 70: Strukturelement
- 80: Fixiermittel
- 90: Rippe
- 100: Küchengerät
- 110: Öffnung

## Patentansprüche

1. Griffhaltevorrichtung (20) für einen Topf (30), aufweisend
- ein bogenförmiges Haltemittel (40) zur Anlage an einer Außenseite des Topfes (30), welches den Topf (30) in der am Topf (30) befestigten Position in horizontaler Ebene zumindest bereichsweise umgibt, und
- einen Griff (50), der mit dem bogenförmigen Haltemittel (40) verbunden ist,
wobei die Griffhaltevorrichtung (20) lösbar mit dem Topf (30) verbindbar und derart an den zu verbindenden Topf (30) angepasst ist, dass Strukturelemente (70) des Topfes (30) das bogenförmige Haltemittel (40) während der Benutzung in seiner Position fixieren.

2. Griffhaltevorrichtung gemäß Anspruch 1,
**dadurch gekennzeichnet, dass**
das Haltemittel (40) und der Griff (50) einstückig ausgeführt sind oder das Haltemittel (40) und der Griff (50) lösbar verbunden sind.

3. Griffhaltevorrichtung gemäß Anspruch 1 oder 2,
**dadurch gekennzeichnet, dass**
das Haltemittel (40) an seiner Innenseite Vertiefungen (60) aufweist, die in der am Topf (30) befestigten Position mit den Strukturelementen (70) des Topfes (30) zusammenwirken.

4. Griffhaltevorrichtung gemäß dem vorhergehenden Anspruch,
**dadurch gekennzeichnet, dass**
sich in der am Topf (30) befestigten Position die Strukturelemente (70) des Topfes (30) durch die Vertiefungen (60) erstrecken.

5. Griffhaltevorrichtung gemäß einem der beiden vorhergehenden Ansprüche, **dadurch gekennzeichnet, dass**
Innenflächen der Vertiefungen (60) in der am Topf (30) befestigten Position an den Strukturelementen (70) des Topfes (30) anliegen.

6. Griffhaltevorrichtung gemäß einem der vorhergehenden Ansprüche,
**dadurch gekennzeichnet, dass**
am Haltemittel (40) Fixiermittel (80) vorgesehen sind, die die Griffhaltevorrichtung (20) in der am Topf (30) befestigten Position am Topf (30) in vertikaler Richtung halten.

7. Griffhaltevorrichtung gemäß dem vorhergehenden Anspruch,
**dadurch gekennzeichnet, dass**
die Fixiermittel (80) in der am Topf (30) befestigten Position mit Öffnungen (110) an der Außenseite des Topfes (30) lösbar verrasten.

8. Griffhaltevorrichtung gemäß einem der beiden vorhergehenden Ansprüche, **dadurch gekennzeichnet, dass**
die Fixiermittel (80) Haken, Öffnungen oder vorstehende Elemente sind.

9. Griffhaltevorrichtung gemäß einem der vorhergehenden Ansprüche,
**dadurch gekennzeichnet, dass**
am Haltemittel (30) sich erstreckende Versteifungsrippen (90) vorgesehen sind.

10. Küchengerät (100), aufweisend einen Topf (30) mit Strukturelementen (70), **gekennzeichnet durch**
eine Griffhaltevorrichtung (20) nach einem der vorhergehenden Ansprüche.

11. Verfahren zum Anbringen einer Griffhaltevorrichtung (70), insbesondere Griffhaltevorrichtung gemäß Anspruch 7, an einem Küchengerät (100), das einen Topf (30) mit Strukturelementen (70) aufweist, die wiederum mit lösbaren Deckeln verschlossene Öffnungen (110) aufweisen, wobei zuerst die Deckel entfernt werden, indem ein stiftförmiges Hilfsmittel, das frontseitig mit einem Klebemittel versehen ist, frontseitig auf den entsprechenden Deckel gedrückt wird, bis sich eine ausreichende Klebekraft entwickelt hat, um den Deckel durch Ziehen zu lösen und die jeweilige Öffnung (110) freizugeben, und anschließend das bogenförmige Haltemittel (40) der Griffhaltevorrichtung (20) an eine Außenseite des Topfes (30) angelegt wird, wobei die Fixiermittel (80) mit den Öffnungen (110) verrastet werden.
